Europäisches Patentamt

(19) European Patent Office

Office européen des brevets

(11) Publication number: **0 036 254**

**A1**

## (12) EUROPEAN PATENT APPLICATION

(21) Application number: **81300735.8**

(22) Date of filing: **23.02.81**

(51) Int. Cl.³: **F 16 L 33/20**
**F 16 K 27/06**

(30) Priority: **13.03.80 GB 8008580**

(43) Date of publication of application:
**23.09.81 Bulletin 81/38**

(84) Designated Contracting States:
**DE GB IT NL**

(71) Applicant: **BRYAN DONKIN COMPANY LIMITED**
**Derby Road**
**Chesterfield S40 2EB(GB)**

(72) Inventor: **Griffiths, Richard Henry**
**Rusper Derwent Avenue**
**Matlock Derbyshire(GB)**

(72) Inventor: **Johnson, Robert Anthony**
**32, Yew Tree Drive Somersall**
**Chesterfield Derbyshire(GB)**

(74) Representative: **Bray, Lilian Janet et al,**
**MARKS & CLERK Scottish Life House Bridge Street**
**Manchester M3 3DP(GB)**

(54) **A pipe joint.**

(57) A pipe joint is formed between first and second components wherein the first component (1) comprises a sleeve (2a, 2b) and the second component (16,17) comprises a length of resilient plastics pipe. The interior surface of the sleeve (2a, 2b) is provided with a series of ridge and groove formations (18, 19) and the plastics pipe (16, 17) is inserted into the sleeve (2a, 2b) and retained therein by means of a rigid insert (20,21). The rigid insert (20,21) is located within that portion of the pipe (16,17) lying within the sleeve (2a, 2b) and causes expansion of the pipe (16,17) radially whereby the outer pipe surface engages the ridge and groove formations (18,19) and takes up a complementary shape thereto to form said joint with the first component(1).

1.

# A PIPE JOINT

The present invention relates to a pipe joint
between two components.

Recently, it has become common practice to use
pipes made of resilient plastics material for
distribution purposes such as domestic gas supply
pipes leading into consumers' properties. It is
often necessary to include in these pipes components
such as isolation valves, which must be high
integrity valves and corrosion resistant, and it
is therefore necessary for high integrity joints
to be made between these pipes and the components.
Difficulty has often arisen in the past as a result
of the plastics pipes and the components being made
of different materials so that production of a
high integrity joint involves producing a transition
fitting which is compatible with both materials.

2.

The object of the present invention is to provide a pipe joint which is suitable for use with resilient plastics pipes and fittings.

According to the present invention there is provided in a combination of first and second components, a pipe joint between the components wherein the first component comprises a sleeve and the second component comprises a length of resilient plastics pipe which is inserted into the sleeve and retained therein characterised in that the interior surface of the sleeve is provided with a series of ridge and groove formations and the plastics pipe is retained therein by means of a rigid insert which is located within that portion of the pipe lying within the sleeve and which causes expansion of the pipe radially whereby the outer pipe surface engages the ridge and groove formations and takes up a complementary shape thereto to form said joint with the first component.

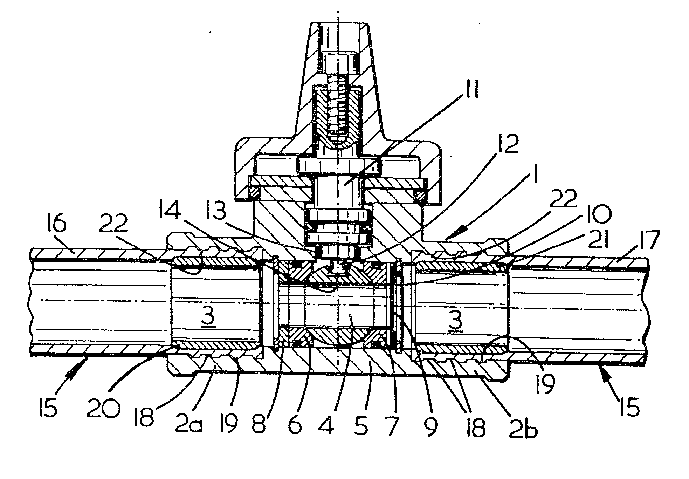

The present invention will now be described by way of example with reference to the accompanying drawing which is a cross-sectional view of a rotary ball valve jointed into a pipeline.

The rotary ball valve comprises a main body 1 including coaxial sleeves 2a and 2b which form the inlet and the outlet of a fluid flow passage 3 through the valve. An apertured ball member 4 is disposed within a central cylindrical portion 5 of the passage 3, which portion is of a smaller diameter than the

3.

sleeves 2a and 2b. The ball member 4 is located between a pair of valve seat members 6 and 7 which are also disposed within the central portion 5. The valve seat member 6 abuts against a fixed insert 8 located within the portion 5 whereas the seat member 7 is acted upon by the force of a Belleville spring washer 9 which abuts against a second fixed insert 10 also located within the portion 5. In this way the ball member 4 is clamped between the seat member 6 and 7 with an approximately constant pressure being exerted thereon, the spring washer 9 taking up slack as the ball member 4 and the seat members 6 and 7 wear.

A valve stem 11 is mounted for rotation in an upstanding part of the main body 1 and has a projecting key piece 12 which extends through a hole 13 in the central portion 5 and engages an aperture 14 in the surface of the ball member 4. This arrangement is such that the ball member 4 can be turned by the valve stem 11 to open or close the valve.

The flow passage 3 of the ball valve is connected to pipework 15 which is made of a resilient plastics material, such as polyethylene. The pipework 15 may comprise transition pipework, which comprises short lengths of pipe for connection into a main pipeline or other components in a pipeline, or may comprise longer lengths of pipe which form a direct part of a pipeline. As shown in the drawing, lengths of pipe 16 and 17 are connected to the sleeves 2a and 2b respectively.

4.

The interior surface of each of the sleeves 2a and 2b is configured to provide a series of ridge and groove formations 18 and 19 respectively formed annularly around the interior surfaces of the sleeves 2a and 2b. The pipes 16 and 17 are partially inserted into the sleeves 2a and 2b and rigid annular inserts 20 and 21 are located respectively within those portions of the pipes 16 and 17 lying within the sleeves 1 and 2. The inserts 20 and 21 are preferably made of metal such as for example steel, and must have an outer diameter sufficiently large to cause expansion of the diameter of the pipes 16 and 17 whereby the outer surfaces 22 of the pipes 16 and 17 are expanded radially to engage the ridge and groove formations 18 and 19 and to take up a complementary shape thereto. In this way a strong gas-tight joint can be formed.

The joint is produced by the insertion of one end of the pipes 16 and 17 into the sleeves 1 and 2 respectively and thereafter forcing the inserts 20 and 21 down the pipes 16 and 17 from their free ends until the inserts 20 and 21 are also located within the sleeves 1 and 2.

The body 1 of the valve would preferably be made of metal for domestic gas supply services and the abovedescribed joint provides a means of successfully connecting a plastics pipe to the metal valve. However, to prevent corrosion of the body 1 if the valve is to be located underground, the body 1 is preferably coated with a layer of resilient plastics

5.

material, such as polyethylene or another similar plastics material.

The joint is also improved in strength if the ridge and groove formations 18 and 19 are produced so that sharp right-angled corners are avoided. Preferably, the angles between the grooves and ridges are oblique as shown on the drawing. This prevents the plastics pipes 16 and 17 from being easily sheared out of the sleeves 1 and 2 which can be caused by sharp right-angle corners cutting into the plastics pipes 16 and 17 so that they free themselves from the sleeves 1 and 2.

6.

CLAIMS:

1. In a combination of first and second components, a pipe joint between the components wherein the first component comprises a sleeve and the second component comprises a length of resilient plastics pipe which is inserted into the sleeve and retained therein characterised in that the interior surface of the sleeve (2a, 2b) is provided with a series of ridge and groove formations (18, 19) and the plastics pipe (16, 17) is retained therein by means of a rigid insert (20,21) which is located within that portion of the pipe (16, 17) lying within the sleeve (2a, 2b) and which causes expansion of the pipe (16, 17) radially whereby the outer pipe surface (22) engages the ridge and groove formations (18, 19) and takes up a complementary shape thereto to form said joint with the first component (1).

2. A pipe joint as claimed in claim 1, characterised in that the ridge and groove formations (18, 19) are annular around the interior surface of the sleeve (2a, 2b).

3. A pipe joint as claimed in claim 1 or 2, characterised in that the insert (20, 21) comprises an annular insert with an outer diameter sufficiently large to cause radial expansion of the pipe (16, 17) when inserted therein.

4. A pipe joint as claimed in any one of claims 1 to 3, characterised in that the angles between the

7.

grooves (19) and ridges (18) of the ridge and groove
formations are oblique.

5.    A pipe joint as claimed in any one of claims 1
to 4, characterised in that the first component (1)
comprises a metal component, the exterior surface
of which is covered by a layer of plastics material.

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 1 725 286 (LOUGHEAD)<br>* Page 1, line 91 to page 2, line 31; figures 1-5 *<br>-- | 1-3 | F 16 L 33/20<br>F 16 K 27/06 |
| X | US - A - 1 849 076 (DICK)<br>* Figures 1-4 *<br>-- | 1-4 | |
| | FR - A - 1 504 247 (MANNESMANN)<br>* Page 1, lines 1-5; figures 1-4 *<br>-- | 5 | **TECHNICAL FIELDS SEARCHED (Int. Cl.³)** |
| A | US - A - 2 481 730 (DOERR) | | F 16 L |
| A | FR - A - 2 428 198 (HONEYWELL) | | |
| | ----- | | |

The present search report has been drawn up for all claims

| Place of search The Hague | Date of completion of the search 25-06-1981 | Examiner ANGIUS |
|---|---|---|

EPO Form 1503.1 06.78